# EUROPEAN PATENT SPECIFICATION

(11) **EP 2 086 170 B1**
(45) Date of publication and mention of the grant of the patent: **05.11.2014**
(21) Application number: 07817372.1
(22) Date of filing: 14.12.2007
(51) Int. Cl.: H04L 12/24, H04L 12/28

(54) **Method, equipment and system for acquiring and providing CPE function configuration information**
Verfahren, Gerät und System zum Ermitteln und Bereitstellen von Informationen betreffend CPE Funktionskonfigurationen
Procédé, équipement et système pour acquérir et fournir des informations de configuration de fonction CPE

(30) Priority: 15.12.2006 CN 200610168030
(43) Date of publication of application: 05.08.2009
(73) Proprietor: Huawei Technologies Co., Ltd., Longgang District, Shenzhen Guangdong 518129 (CN)
(72) Inventor: XU, Junxia, Shenzhen Guangdong 518129 (CN)
(74) Representative: Thun, Clemens
(86) International application number: PCT/CN2007/071232
(87) International publication number: WO 2008/071127

(56) References cited:
- EP-A- 1 746 767
- CN-A- 1 838 659
- CN-A- 1 859 160
- US-B1- 6 584 074
- BROADBAND FORUM: "TR-069 CPE WAN Management Protocol v1.1 Issue 1 Amentment 1" 30 November 2006 (2006-11-30), BROADBAND FORUM TECHNICAL REPORT,, PAGE(S) 1 - 138 , XP002550467 * paragraph [03.2] - paragraph [3.2.2] * * paragraph [0A.1] - paragraph [A.3.2.5.] *

## Description

### Field of the Invention

The present invention relates to data communication technologies, and in particular, to a method, apparatus, and system for acquiring and providing customer premises equipment (CPE) function configuration information in data communication field.

### Background of the Invention

With the development of the CPE WAN Management Protocol (CWMP, also referred to as TR069) defined by the Digital Subscriber Line (DSL) Forum, more and more operators are inclined to use TR069 to configure terminal services. CWMP can be used to remotely manage terminal devices, automatically configure terminal services, deliver services, upgrade and back up software and firmware, check performance, and diagnose devices.

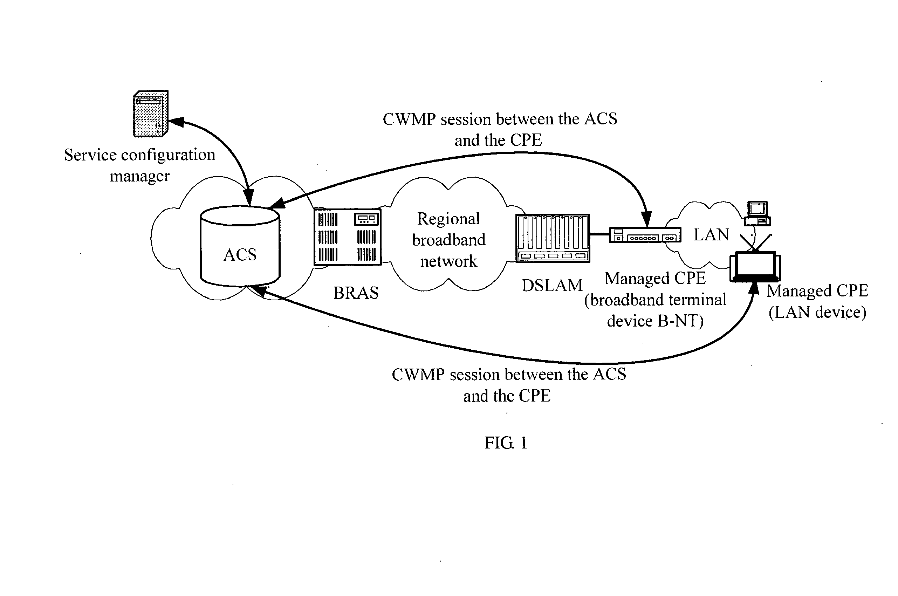

FIG. 1 shows an automatic configuration management model for terminal defined in TR069. After the CPE sets up a CWMP connection with the automatic configuration server (ACS), the ACS first acquires the parameter model supported by the CPE and then configures the CPE according to the parameter model so as to deploy corresponding services. The CPE is a device that is installed on the user's location and is connected to the network of a telephone company, such as a telephone set, a modem, or a terminal. CWMP is a CPE WAN management protocol, which is defined in TR069.

TR069 specifies a method for acquiring the parameter model supported by the CPE. The method includes: after the CPE sets up a CWMP connection with the ACS, the ACS calls a Get Parameter Names function to specify a parameter that the CPE needs to return and the CPE returns a Get Parameter Names Response to the ACS according to information carried by a Get Parameter Names RPC function. The Get Parameter Names Response only contains the parameter names of the parameter model supported by the CPE and the read-write attributes of the parameters.

The following details how to call the Get Parameter Names RPC function to specify a parameter that the CPE needs to return. The Get Parameter Names RPC function contains a "Parameter Path" parameter and a "NextLevel" parameter.

The parameter type of "Parameter Path" is a string type. The "Parameter Path" indicates a complete parameter name or a partial path of a parameter name. When the parameter indicates a partial path, the last-level node of the parameter name is followed by a dot (.).

If the "Parameter Path" parameter is set to "Internet Gateway Device. DeviceInfo. Serial Number", the parameter indicates a complete parameter name.

If the "Parameter Path" parameter is set to "Internet Gateway Device.Devicelnfo.", the parameter indicates a partial path of a parameter name.

The parameter type of "NextLevel" is a Boolean type. It can be set to "false" or "true".

If the "NextLevel" parameter is set to "false", the CPE lists the full path of all the parameters beginning with the string specified by the "Parameter Path" parameter in the Get Parameter Names Response.

If the "NextLevel" parameter is set to "true", the CPE only lists parameter names at a lower level than the string specified by the "Parameter Path" parameter or partial path names in the Get Parameter Names Response.

For example, if the "Parameter Path" parameter is set to "Internet Gateway Device.LANDevice." and the "NextLevel" parameter is set to "true", the CPE lists the following parameter names at a lower level than "Internet Gateway Device.LANDevice." in the Get Parameter Names Response: "InternetGatewayDevice.LANDevice.1." and "InternetGatewayDevice.LANDevice.2.".

The CPE does not need to carry other parameter names at even lower level than the preceding two parameter name levels in the Get Parameter Names Response.

If the "Parameter Path" parameter is set to "Internet Gateway Device" and the "NextLevel" parameter is set to "true", the CPE carries the following parameter names in the Get Parameter Names Response:
"InternetGatewayDevice.LANDeviceNumberOfEntrie";
"InternetGatewayDevice.WANDeviceNumberOfOfEntries.";
"InternetGatewayDevice.LANDevice.";
"InternetGatewayDevice.WANDevice."; and
"InternetGatewayDevice.ManagementServer."

If the "NextLevel" parameter is set to "true" but the "Parameter Path" parameter does not indicate a partial path, the CPE must return an error response with error code 9005 indicating an invalid parameter name to the ACS.

The above examples merely indicate that the Get Parameter Names Response can be used to return the parameter model supported by the CPE to the ACS. The following details how the Get Parameter Names Response carries the parameters that the CPE needs to return as specified in the Get Parameter Names RPC function.

The Get Parameter Names Response contains a "Parameter List" parameter. The parameter carries the names and read-write attributes of the parameters that the CPE needs to return.

The parameter type of "Parameter List" is a structure array (Parameter InfoStruct[]). Each Parameter InfoStruct[] contains a "name" parameter indicating a parameter name and a "Writeable" parameter indicating the read-write attribute of a parameter.

The "name" parameter indicates the parameter name to be returned.

For example, the "Internet Gateway Device.LANDevice.1." is returned to the ACS through the "name" parameter.

The "Writeable" parameter indicates the read-write attribute of a parameter, that is, indicates whether the Set Parameter Values function can be called to modify the value of the parameter.

If the "NextLevel" parameter is set to "true", the "name" parameter indicates a partial path of a parameter name. The "Writeable" parameter indicates that a new instance corresponding to the parameter can be added through an Add Object method or deleted through a Delete Object method.

When the Get Parameter Names RPC function is called to acquire the parameter model supported by the CPE, the Get Parameter Names Response only contains the name and read-write attribute of a parameter but does not specify the type or value range of the parameter. Therefore, when configuring the CPE, the ACS cannot check the validity of data or apply the data. In particular, the ACS cannot check the validity of the extended CPE data or apply the extended CPE data.

In the conventional art, document CN1859160 describes a configuration management method for a CPE. When the CS needs to configure the parameters on the CPE, firstly the CS locally performs modification of a configuration file corresponding to the CPE, and stores the modified configuration file to the file server. Then the CPE is set through RPC, notified of downloading or uploading the configuration file from the file server, and informed of relevant parameter necessary for the download or upload of the configuration file, such as the address of the server, a protocol type for the download (FTP or HTTP, and in the case of FTP, an account number and a password are further needed to be provided), a path destined for the file, the name of the file, etc.

In the conventional art, another method for acquiring the parameter model supported by the CPE is provided. That is, CPE vendors provide operators with the parameter model supported by the CPE in an extensible markup language (XML) Schema file and then the operators use the operation support system to deliver the parameter model to ACS vendors. The disadvantage of the method is that the ACS has to acquire the parameter model supported by the CPE through operators and the operation support system needs to be correctly configured before the ACS manages the CPE. Thus, a binding relationship exists between the ACS and the CPE, and this causes inconveniency in configuring the CPE by the ACS in real time.

### Summary of the Invention

Embodiments of the present invention provide methods, an apparatus, and terminal configuration systems for acquiring CPE function configuration information and for providing CPE function configuration information to enable an ACS to know the CPE function configuration information such as the parameter type supported by a CPE and the parameter value range and thus to decrease the error probability when CPE services are configured.

A method for acquiring CPE function configuration information in an embodiment of the present invention includes:
setting up a CWMP session between an ACS and a CPE;
sending, by the ACS, a command to the CPE to request the CPE to upload CPE function configuration information to a specified server, wherein the CPE function configuration information comprises a parameter type supported by the CPE and a parameter value range;
uploading the CPE function configuration information to the specified server;
receiving, by the specified server, the CPE function configuration information uploaded by the CPE;
acquiring, by the ACS, the CPE function configuration information from the specified server; and
configuring, by the ACS, the CPE according to the CPE function configuration information.

A method for acquiring CPE function configuration information in an embodiment of the present invention includes:
setting up a CWMP session between an ACS and a CPE;
sending, by the ACS, a command to the CPE to request the CPE to upload CPE function configuration information to a specified server, wherein the CPE function configuration information comprises a parameter type supported by the CPE and a parameter value range;
uploading the CPE function configuration information to the specified server;
receiving, by the specified server, the CPE function configuration information uploaded by the CPE;
instructing, by the ACS, the specified server to perform corresponding processing according to the received CPE function configuration information; and
configuring, by the ACS, the CPE according to a processing result of the specified server.

A method for acquiring CPE function configuration information in an embodiment of the present invention includes:
setting up a CWMP session between an ACS and a CPE;
sending, by the ACS, a command to the CPE to request the CPE to upload CPE function configuration information to the ACS, wherein the CPE function configuration information comprises a parameter type supported by the CPE and a parameter value range;
uploading, by the CPE, the CPE function configuration information to the ACS;
receiving, by the ACS, the CPE function configuration information uploaded by the CPE; and
configuring, by the ACS, the CPE according to the CPE function configuration information.

An ACS in an embodiment of the present invention includes:
a session requesting unit, configured to: send a request for setting up a CWMP session to a CPE, receive a request response message sent from the CPE, set up a CWMP session with the CPE, and notify a signaling sending unit that the CWMP session has been set up after the CWMP session is set up; and
the signaling sending unit, configured to send a command to the CPE to request the CPE to upload CPE function configuration information to a specified server after receiving a notification sent from the session requesting unit, wherein the CPE function configuration information comprises a parameter type supported by the CPE and a parameter value range;
a function configuration information acquiring unit, configured to: acquire the CPE function configuration information that is uploaded to the specified server and store the acquired CPE function configuration information to a function configuration information storing unit;
the function configuration information storing unit, configured to store the CPE function configuration information; and
a function configuring unit, configured to configure the CPE according to the CPE function configuration information stored in the function configuration information storing unit.

A terminal configuration system in an embodiment of the present invention includes:
an ACS, configured to: send a request for setting up a CWMP session to a CPE, receive a request response message from the CPE, set up a CWMP session with the CPE, and send a command to the CPE to request the CPE to upload CPE function configuration information to a specified object server, wherein the CPE function configuration information comprises a parameter type supported by the CPE and a parameter value range;
the CPE, configured to: receive request for setting up a CWMP session from the ACS, send the request response message to the ACS, set up the CWMP session with the ACS, receive the command sent from the ACS requesting the CPE to upload CPE function configuration information to the specified server, and upload the stored CPE function configuration information to the specified server; and
the specified server, configured to receive and store the CPE function configuration information uploaded by the CPE;
wherein the ACS is further configured to acquire the CPE function configuration information from the specified server and configure the CPE according to the CPE function configuration information.

A terminal configuration system in an embodiment of the present invention includes:
an ACS, configured to: send a request for setting up a CWMP session to a CPE, receive a request response message from the CPE, set up a CWMP session with the CPE, and send a command to the CPE to request the CPE to upload CPE function configuration information to a specified object server, wherein the CPE function configuration information comprises a parameter type supported by the CPE and a parameter value range;
the CPE, configured to: receive request for setting up a CWMP session from the ACS, send the request response message to the ACS, set up the CWMP session with the ACS, receive the command sent from the ACS requesting the CPE to upload CPE function configuration information to the specified server, and upload the stored CPE function configuration information to the specified server; and
the specified server, configured to receive and store the CPE function configuration information uploaded by the CPE;
wherein the specified server is further configured to perform corresponding processing according to an instruction from the ACS and the received CPE function configuration information; and
the ACS is further configured to configure the CPE according to a processing result from the specified server.

A terminal configuration system in an embodiment of the present invention includes:
an ACS, configured to: send a request for setting up a CWMP session to a CPE, receive a request response message from the CPE, set up a CWMP session with the CPE, and send a command to the CPE to request the CPE to upload CPE function configuration information to the ACS, wherein the CPE function configuration information comprises a parameter type supported by the CPE and a parameter value range; and
the CPE, configured to: receive request for setting up a CWMP session from the ACS, send the request response message to the ACS, set up the CWMP session with the ACS, receive the command sent from the ACS requesting the CPE to upload CPE function configuration information to the ACS, and upload the stored CPE function configuration information to the ACS;
wherein the ACS is further configured to configure the CPE according to the CPE function configuration information.

According to the above-mentioned contents, the technical solution provided in embodiments of the present invention brings the following benefits: In the embodiments of the present invention, the ACS sends a command to the CPE to request the CPE to upload CPE function configuration information to a specified object (a specified server or the ACS), after setup of the CWMP session with the CPE, so that the ACS can acquire the CPE function configuration information and thus the error probability in configuring CPE services is decreased according to the acquired information.

### Brief Description of the Drawings

FIG. 1 shows an automatic configuration management model;
FIG. 2 shows a flowchart of a method for acquiring CPE function configuration information in an embodiment of the present invention;
FIG. 3 shows a flowchart of a method for acquiring a CPE parameter model in an embodiment of the present invention;
FIG. 4 shows a signaling flowchart of a method implemented for acquiring a CPE parameter model according to an embodiment of the present invention;
FIG. 5 shows a signaling flowchart of a method implemented for acquiring a CPE parameter model according to an embodiment of the present invention;
FIG. 6 shows a flowchart for acquiring a function configuration method supported by the CPE;
FIG. 7 shows a flowchart of a method implemented for acquiring a function configuration method supported by the CPE;
FIG. 8 shows a flowchart of a method implemented for acquiring a function configuration method supported by the CPE;
FIG. 9 shows a schematic diagram of structure of an ACS provided in an embodiment of the present invention;
FIG. 10 shows a schematic diagram of structure of a CPE, and
FIG. 11 shows a schematic diagram of structure of a terminal configuration system provided in an embodiment of the present invention.

### Detailed Description of the Invention

An embodiment of the present invention provides a method for acquiring CPE function configuration information. The method includes the following steps:
Step 201: The CPE sets up a CWMP session with the ACS.
Step 202: The ACS sends a command to the CPE to request the CPE to upload CPE function configuration information.
Step 203: After receiving the command, the CPE uploads the CPE function configuration information to a server.

The CPE function configuration information may be the parameter type supported by the CPE and/or the parameter value range, or a function configuration method supported by the CPE. The method is described in detail according to the two cases, wherein in the invention the CPE function configuration information are the parameter type supported by the CPE and the parameter value range. The function configuration method as the CPE function configuration information is not part of the invention.

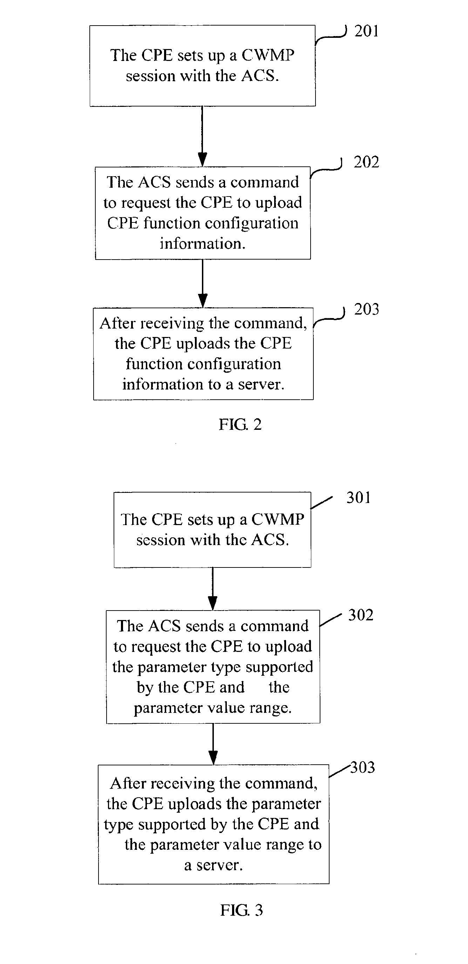

When the CPE function configuration information is the parameter type supported by the CPE and the parameter value range, the flowchart of the method is shown in FIG. 3 and the method includes the following steps:
Step 301: The CPE sets up a CWMP session with the ACS.
Step 302: The ACS sends a command to the CPE to request the CPE to upload the parameter type supported by the CPE and the parameter value range.
Step 303: After receiving the command, the CPE uploads the parameter type supported by the CPE and the parameter value range to the server.

The parameter type supported by the CPE or the parameter value range may be automatically generated by the CPE or may be provided by the CPE vendor and stored on the CPE. And this does not affect the implementation of the present invention.

In general, the XML Schema is adopted to describe the parameter type supported by the CPE and the parameter value range. Other languages may also be used, which does not affect the implementation of the present invention.

In actual applications, the server may be a specified server or the ACS. The server is a server whose address is specified by a user (namely, the ACS). Based on the preceding information, technical person in this field may know that the CPE may upload the CPE function configuration information to the ACS or other servers (hereinafter referred to as a specified server) other than the ACS according to the request sent from the ACS. In other words, the ACS requests the CPE to upload CPE function configuration information to a specified object, that is, a specified server. The specified object may be the ACS or a specified server other than the ACS. If the specified object is the ACS, the ACS can of course configure the CPE according to the acquired CPE function configuration information. If the specified object is a specified server other than the ACS, two cases exist. In one case, the ACS acquires the CPE function configuration information from the specified server and then configures the CPE according to the acquired information. In the other case, the ACS does not have to acquire the CPE configuration information from the specified server. The ACS instructs the specified server to perform corresponding processing according to the acquired CPE configuration information and then configures the CPE according to the processing result of the specified server. It can be seen that, the ACS configures the CPE according to the CPE function configuration information in both cases. Therefore, compared with the conventional art in which the ACS configures the CPE only according to the acquired CPE parameter model information (that is, the parameter name and read-write attribute of the supported parameter model), the embodiment of the present invention has a lower error probability.

When the server is a specified server, the Upload command specified in TR069 may be used to implement the preceding method. Because the Upload command specified in TR069 includes a "FileType" parameter, a "URL" parameter, a "Username" parameter, and a "Password" parameter.

The ACS sends the Upload command to the CPE. The CPE uploads corresponding data to the specified server according to the set value of the "FileType" parameter in the Upload command. The "URL", "Username", and "Password" parameters carry the address, login username, and login password of the specified server respectively. The login username corresponds to the login password on a one-to-one basis.

As specified in TR069, the "FileType" parameter can be set to "1 Vendor Configuration File" or "2 Vendor Log File".

When the "FileType" parameter is set to "1 Vendor Configuration File", it indicates that the CPE needs to upload the file that records user configuration information to the specified server. The user configuration information includes user-related information such as the username and password, or includes certain function parameters configured by a user such as relevant configuration information of the Dynamic Host Configuration Protocol (DHCP) or wireless local area network (WLAN).

When the "FileType" parameter is set to "2 Vendor Log File", it indicates that the CPE needs to uploads the file that records user operation logs to the specified server.

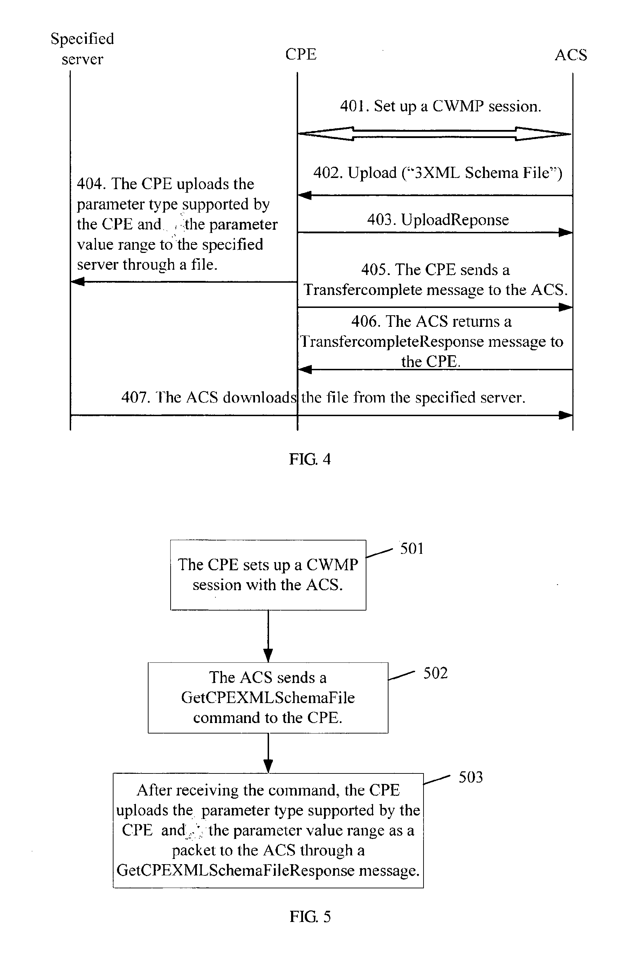

In the embodiment of the present invention, a set value is added to the set values of the "FileType" parameter. The added set value indicates that the CPE needs to upload the supported parameter type and the parameter value range. The value name complies with the naming rule of set value of the "FileType" parameter specified in TR069, such as "3 XML Schema File" or others like "4 XML Schema File" or "3 XML File". The naming rule is as follows: integer + space + file type description. FIG. 4 shows a flowchart of a method for acquiring the parameter model supported by the CPE via the Upload command. The method includes the following steps:
Step 401: The CPE sets up a CWMP session with the ACS.
Step 402: The ACS sends the Upload command to the CPE. In the Upload command, the "FileType" parameter is set to "3 XML Schema File". "3 XML Schema File" indicates that the CPE needs to upload the supported parameter type and/or the parameter value range.
Step 403: After receiving the command, the CPE returns an UploadResonse message to the ACS, indicating that the Upload command is received.
Step 404: The CPE logs in to the specified server according to the address, login username, and login password of the specified server in the Upload command, and then uploads the supported parameter type and the parameter value range to the specified server through a file.

The preceding steps implement the function that the CPE uploads the supported parameter type and the parameter value range to a specified server. To implement the function of configuring the CPE, the method further includes the following steps:
Step 405: The CPE sends a Transfercomplete message to the ACS, indicating that the parameter type supported by the CPE and the parameter value range are/is uploaded to the specified server through a file.
Step 406: The ACS returns a TransfercompleteResponse message to the CPE, indicating that the Transfercomplete message is received.
Step 407: After receiving the notification, the ACS downloads the parameter type supported by the CPE and the parameter value range from the specified server.
Step 403, step 405, and step 406 are specified steps in the Upload command. As specified in the Upload command, the command receiver needs to return a message to the command sender, indicating that the command is received.

When the server is the ACS, a command indicating that the CPE needs to upload its supported parameter type and/or the parameter value range may be added to the TR069 RPC method. The command may be named GetCPEXMLSchemaFile or other names by other naming rules, such as GetCPEXMLFile. The command may also be named by extending the existing RPC method. For example, the GetParameterNames Rpc method may be extended by extending a parameter indicating the parameter type and/or the parameter value range in the GetParameterNamesResponse message.

The specific naming rule or the specific RPC method for extension may be decided by a technical person. The technical person only need to specify the function of the command in corresponding configuration. As shown in FIG. 5, the method includes the following steps:
Step 501: The CPE sets up a CWMP session with the ACS.
Step 502: The ACS sends a GetCPEXMLSchemaFile command to the CPE.

The GetCPEXMLSchemaFile command indicates that the CPE needs to upload the supported parameter type and/or the parameter value range.
Step 503: After receiving the command, the CPE uploads the parameter type supported by the CPE and the parameter value range as a packet in a GetCPEXMLSchemaFileResponse message to the ACS.

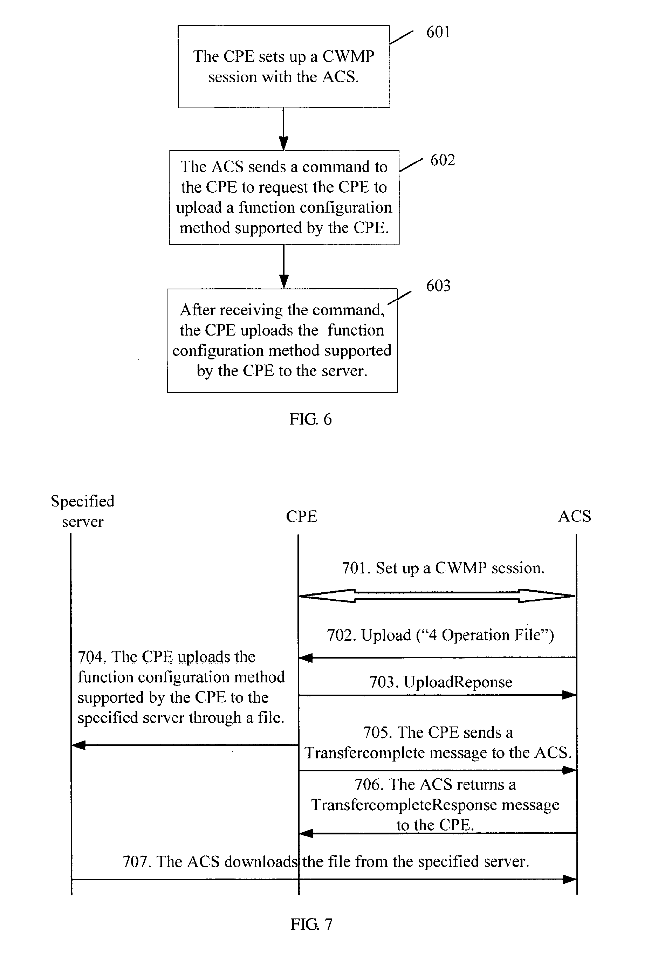

When the CPE function configuration information is a function configuration method supported by the CPE, the flowchart of the method is shown in FIG. 6. The function configuration method supported by the CPE records the parameters supported by the CPE which need to be configured and the configuration processes when a function of the CPE is implemented. After acquiring the function configuration method supported by the CPE, the ACS can configure the terminal according to the configuration process recorded in the function configuration method. Thus, the error probability in configuring terminal services is decreased. The method includes the following steps:
Step 601: The CPE sets up a CWMP session with the ACS.
Step 602: The ACS sends a command to the CPE to request the CPE to upload the function configuration method supported by the CPE.
Step 603: After receiving the command, the CPE uploads the supported function configuration method to the server.

The server in step 603 may be a specified server or the ACS.

When the server is a specified server, the Upload command specified in TR069 may be used to implement the method for acquiring the function configuration method supported by the CPE.

A set value is added to the set values of the "FileType" parameter. The added set value indicates that the CPE needs to upload the function configuration method supported by the CPE. The name of the set value complies with the naming rule for set value of the "FileType" parameter specified in TR069, such as "4 Operation File" or others like "3 Operation File" or "4 Configuration File". FIG. 7 shows a flowchart of a method for acquiring the function configuration method supported by the CPE via the Upload command. The method includes the following steps:
Step 701: The CPE sets up a CWMP session with the ACS.
Step 702: The ACS sends the Upload command to the CPE. In the command, the set value of the "FileType" parameter is "4 Operation File". "4 Operation File" indicates that the CPE needs to upload the function configuration method supported by the CPE.
Step 703: The CPE returns an UploadResponse message to the ACS, indicating that the Upload command is received.
Step 704: The CPE logs in to the specified server according to the address, login username, and login password of the specified server carried in the Upload command, and then uploads the supported function configuration method to the specified server through a file.

The preceding steps implement the CPE uploading the function configuration method supported by the CPE to a specified server. To implement configuring the CPE, the method further includes the following steps:
Step 705: The CPE sends a Transfercomplete message to the ACS, indicating the function configuration method supported by the CPE is uploaded to the specified server.
Step 706: The ACS returns a TransfercompleteResponse message to the CPE, indicating that the Transfercomplete message is received.
Step 707: The ACS acquires the function configuration method supported by the CPE from the specified server and configures the CPE according to the acquired method.
Step 703, step 705, and step 706 are specified steps in the Upload command. As specified in the Upload command, the command receiver needs to return a message to the command sender, indicating that the command is received.

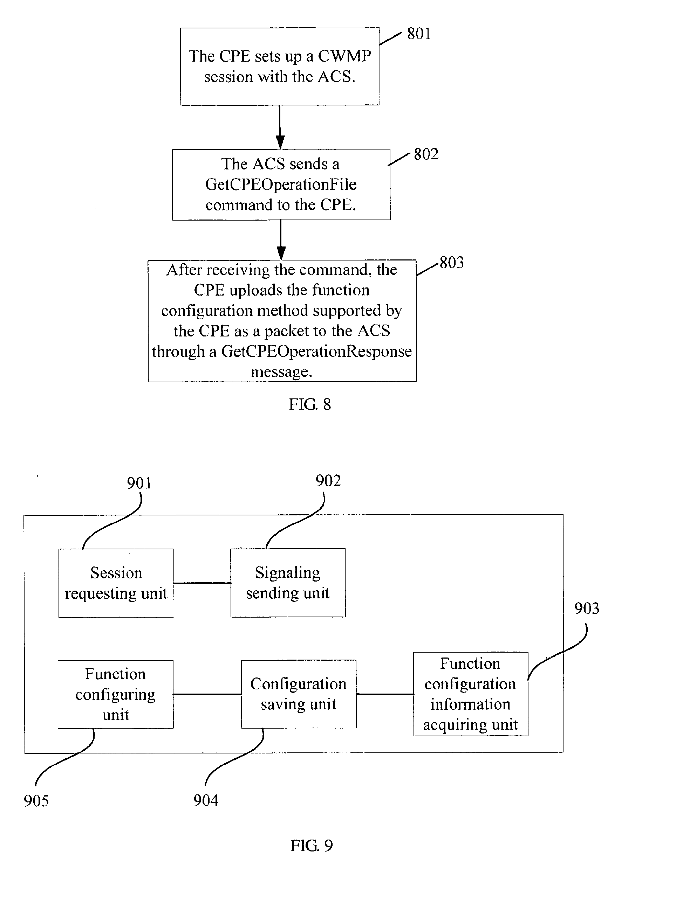

When the server is the ACS, a command indicating that the CPE needs to upload the function configuration method supported by the CPE may be added to the TR069 RPC method. The command may be named GetCPEOperationFile or others such as GetCPEConfigrationFile. The command may also be named by extending the existing RPC method. For example, the GetParameterNames Rpc method may be extended by extending a parameter indicating the function configuration method in the GetParameterNamesResponse message. The specific naming rule or the specific RPC method for extension is decided by a technical person. The technical person only need to specify the function of the command in corresponding configuration. As shown in FIG. 8, the method includes the following steps:
Step 801: The CPE sets up a CWMP session with the ACS.
Step 802: The ACS sends a GetCPEOperationFile command to the CPE.
Step 803: After receiving the command, the CPE uploads the function configuration method supported by the CPE as a packet in a GetCPEOperationResponse message to the ACS.

Ordinary technical person in this field may understand that all or part of the steps in the preceding methods may be implemented by hardware following instructions of a program. The program may be stored in a computer readable storage medium such as a Read-Only Memory (ROM), a Random Access Memory (RAM), a magnetic disk or a compact disk.

An embodiment of the present invention provides an ACS, as shown in FIG. 9. The ACS includes a session requesting unit 901 and a signaling sending unit 902.

The session requesting unit is configured to: send a request for setting up a CWMP session to the CPE, receive a request response message from the CPE, set up a CWMP session with the CPE, and notify the signaling sending unit that the CWMP session has been set up after the CWMP session is set up.

The signaling sending unit is configured to send a command to the CPE to request the CPE to upload the CPE function configuration information to a server after receiving the notification sent from the session requesting unit.

The ACS further includes a function configuration information acquiring unit 903, a function configuration information storing unit 904, and a function configuring unit 905.

The function configuration information acquiring unit is configured to acquire the CPE function configuration information that is uploaded to the server and send the information to the function configuration information storing unit.

The function configuration information storing unit is configured to store the CPE function configuration information;

The function configuring unit is configured to configure the CPE according to the CPE function configuration information stored in the function configuration information storing unit.

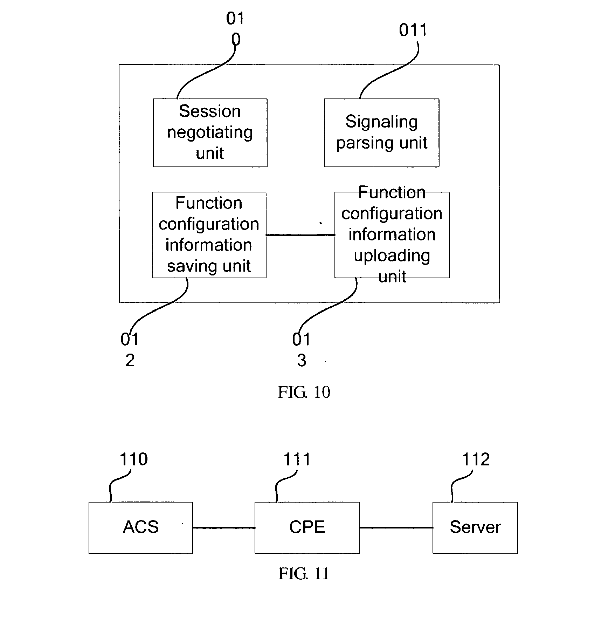

In FIG. 10 a CPE is shown. The CPE includes a session negotiating unit 010, a signaling parsing unit 011, a function configuration information storing unit 012, and a function configuration information uploading unit 013.

The function configuration information storing unit is configured to store the CPE function configuration information.

The session negotiating unit is configured to: receive a request for setting up a CWMP session from the ACS, send a request response message to the ACS, and set up a CWMP session with the ACS.

The signaling parsing unit is configured to: receive a command sent from the ACS requesting the CPE to upload the CPE function configuration information to a server, and notify the function configuration information uploading unit to upload the CPE function configuration information stored in the function configuration information storing unit to the server.

The function configuration information uploading unit is configured to: receive the notification sent from the signaling parsing unit and upload the CPE function configuration information stored in the function configuration information storing unit to the server.

An embodiment of the present invention also provides a terminal configuration system, as shown in FIG. 11. The terminal configuration system includes an ACS 110, a CPE 111, and a server 112.

The ACS is configured to: send a request for setting up a CWMP session to the CPE, receive a request response message sent from the CPE, set up a CWMP session with the CPE, and send a command to the CPE to request the CPE to upload CPE function configuration information to the server.

The CPE is configured to: receive a request for setting up a CWMP session from the ACS, send a request response message to the ACS, set up a CWMP session with the ACS, receive a command sent from the ACS requesting the CPE to upload CPE function configuration information to a server, and upload the CPE function configuration information stored in the CPE to the server.

The server is configured to receive and store the CPE function configuration information uploaded by the CPE.

In the preceding embodiments of the present invention, the ACS is further configured to acquire CPE function configuration information from the server and configure the CPE according to the acquired CPE function configuration information.

Detailed introduction is given to a method, apparatus, and system for acquiring CPE function configuration information in embodiments of the present invention. Specific examples are given to describe principles and implementation of the present invention. The embodiments are intended to help the understanding of the methods and core ideas of the present invention, and not intended to limit the present invention. It is apparent that those skilled in the art can make various modifications and variations to the present invention without departing from the scope of the present invention.

## Claims

1. A method for acquiring customer premises equipment, CPE, function configuration information, the method comprising:
setting up (301) a CPE WAN Management Protocol, CWMP, session between an automatic configuration server, ACS, and a CPE;
sending, by the ACS (302), a command to the CPE to request the CPE to upload CPE function configuration information to a specified server, wherein the CPE function configuration information comprises a parameter type supported by the CPE and a parameter value range;
uploading (303) the CPE function configuration information to the specified server;
receiving (404), by the specified server, the CPE function configuration information uploaded by the CPE;
acquiring (407), by the ACS, the CPE function configuration information from the specified server; and
configuring, by the ACS, the CPE according to the CPE function configuration information.

2. A method for acquiring customer premises equipment, CPE, function configuration information, the method comprising:
setting up (301) a CPE WAN Management Protocol, CWMP, session between an automatic configuration server, ACS, and a CPE;
sending (302), by the ACS, a command to the CPE to request the CPE to upload CPE function configuration information to a specified server, wherein the CPE function configuration information comprises a parameter type supported by the CPE and a parameter value range;
uploading (303) the CPE function configuration information to the specified server;
receiving (404), by the specified server, the CPE function configuration information uploaded by the CPE;
instructing, by the ACS, the specified server to perform corresponding processing according to the received CPE function configuration information; and
configuring, by the ACS, the CPE according to a processing result of the specified server.

3. The method of claim 1 or 2, wherein the command further contains an address, a login username, and a login password of the specified server, and the method further comprises:
logging in to, by the CPE, the specified server according to the address, login username, and login password of the specified server carried in the command.

4. A method for acquiring customer premises equipment, CPE, function configuration information, the method comprising:
setting up (301) a CPE WAN Management Protocol, CWMP, session between an automatic configuration server, ACS, and a CPE;
sending, by the ACS, a command to the CPE to request the CPE to upload CPE function configuration information to the ACS, wherein the CPE function configuration information comprises a parameter type supported by the CPE and a parameter value range;
uploading, by the CPE, the CPE function configuration information to the ACS;
receiving, by the ACS, the CPE function configuration information uploaded by the CPE; and
configuring, by the ACS, the CPE according to the CPE function configuration information.

5. An automatic configuration server, ACS, the ACS comprising:
a session requesting unit (901), configured to: send a request for setting up a CPE WAN Management Protocol, CWMP, session to a customer premises equipment, CPE, receive a request response message from the CPE, set up a CWMP session with the CPE, and notify a signaling sending unit that the CWMP session has been set up after the CWMP session is set up; and
the signaling sending unit (902), configured to send a command to the CPE to request the CPE to upload CPE function configuration information to a specified server after receiving a notification sent from the session requesting unit, wherein the CPE function configuration information comprises a parameter type supported by the CPE and a parameter value range;
a function configuration information acquiring unit, configured to: acquire the CPE function configuration information that is uploaded to the specified server and store the acquired CPE function configuration information to a function configuration information storing unit;
the function configuration information storing unit, configured to store the CPE function configuration information; and
a function configuring unit, configured to configure the CPE according to the CPE function configuration information stored in the function configuration information storing unit.

6. A terminal configuration system, the system comprising:
an automatic configuration server, ACS, configured to: send a request for setting up a CPE WAN Management Protocol, CWMP, session to a customer premises equipment, CPE, receive a request response message from the CPE, set up a CWMP session with the CPE, and send a command to the CPE to request the CPE to upload CPE function configuration information to a specified server, wherein the CPE function configuration information comprises a parameter type supported by the CPE and a parameter value range;
the CPE, configured to: receive the request for setting up a CWMP session from the ACS, send the request response message to the ACS, set up the CWMP session with the ACS, receive the command from the ACS requesting the CPE to upload CPE function configuration information to the specified server, and upload the stored CPE function configuration information to the specified server; and
the specified server, configured to receive and store the CPE function configuration information uploaded by the CPE;
wherein the ACS is further configured to acquire the CPE function configuration information from the specified server and configure the CPE according to the CPE function configuration information.

7. A terminal configuration system, the system comprising:
an automatic configuration server, ACS, configured to: send a request for setting up a CPE WAN Management Protocol, CWMP, session to a customer premises equipment, CPE, receive a request response message from the CPE, set up a CWMP session with the CPE, and send a command to the CPE to request the CPE to upload CPE function configuration information to a specified server, wherein the CPE function configuration information comprises a parameter type supported by the CPE and a parameter value range;
the CPE, configured to: receive the request for setting up a CWMP session from the ACS, send the request response message to the ACS, set up the CWMP session with the ACS, receive the command from the ACS requesting the CPE to upload CPE function configuration information to the specified server, and upload the stored CPE function configuration information to the specified server; and
the specified server, configured to receive and store the CPE function configuration information uploaded by the CPE;
wherein the specified server is further configured to perform corresponding processing according to an instruction from the ACS and the received CPE function configuration information; and
the ACS is further configured to configure the CPE according to a processing result from the specified server.

8. A terminal configuration system, the system comprising:
an automatic configuration server, ACS, configured to: send a request for setting up a CPE WAN Management Protocol, CWMP, session to a customer premises equipment, CPE, receive a request response message from the CPE, set up a CWMP session with the CPE, and send a command to the CPE to request the CPE to upload CPE function configuration information to the ACS, wherein the CPE function configuration information comprises a parameter type supported by the CPE and a parameter value range; and
the CPE, configured to: receive the request for setting up a CWMP session from the ACS, send the request response message to the ACS, set up the CWMP session with the ACS, receive the command from the ACS requesting the CPE to upload CPE function configuration information to the ACS, and upload the stored CPE function configuration information to the ACS;
wherein the ACS is further configured to configure the CPE according to the CPE function configuration information.

## Patentansprüche

1. Verfahren zum Erfassen von Funktionskonfigurationsinformationen über Anlagen am Kundenstandort, CPE-Funktionskonfigurationsinformationen, wobei das Verfahren Folgendes umfasst:
Aufbauen (301) einer CPE-WAN-Managementprotokoll-Sitzung, CWMP-Sitzung, zwischen einem Server zur automatischen Konfiguration (automatic configuration server, ACS) und einer CPE;
Senden (302) durch den ACS eines Befehls zu der CPE, um anzufordern, dass die CPE CPE-Funktionskonfigurationsinformationen zu einem spezifizierten Server hochlädt, wobei die CPE-Funktionskonfigurationsinformationen einen durch die CPE unterstützten Parametertyp und einen Parameterwertebereich umfassen;
Hochladen (303) der CPE-Funktionskonfigurationsinformationen zu dem spezifizierten Server;
Empfangen (404) der durch die CPE hochgeladenen CPE-Funktionskonfigurationsinformationen, durch den spezifizierten Server;
Erfassen (407) durch den ACS der CPE-Funktionskonfigurationsinformationen von dem spezifizierten Server; und
Konfigurieren der CPE gemäß den CPE-Funktionskonfigurationsinformationen durch den ACS.

2. Verfahren zum Erfassen von Funktionskonfigurationsinformationen über Anlagen am Kundenstandort, CPE-Funktionskonfigurationsinformationen, wobei das Verfahren Folgendes umfasst:
Aufbauen (301) einer CPE-WAN-Managementprotokoll-Sitzung, CWMP-Sitzung, zwischen einem Server zur automatischen Konfiguration, ACS, und einer CPE;
Senden (302) durch den ACS eines Befehls zu der CPE, um anzufordern, dass die CPE CPE-Funktionskonfigurationsinformationen zu einem spezifizierten Server hochlädt, wobei die CPE-Funktionskonfigurationsinformationen einen durch die CPE unterstützten Parametertyp und einen Parameterwertebereich umfassen;
Hochladen (303) der CPE-Funktionskonfigurationsinformationen zu dem spezifizierten Server;
Empfangen (404) der durch die CPE hochgeladenen CPE-Funktionskonfigurationsinformationen durch den spezifizierten Server;
Anweisen des spezifizierten Servers durch den ACS, entsprechende Verarbeitung gemäß den empfangenen CPE-Funktionskonfigurationsinformationen auszuführen;
und
Konfigurieren der CPE gemäß einem Verarbeitungsergebnis des spezifizierten Servers durch den ACS.

3. Verfahren nach Anspruch 1 oder 2, wobei der Befehl ferner eine Adresse, einen Anmelde-Anwendernamen und ein Anmelde-Passwort des spezifizierten Servers enthält und das Verfahren ferner Folgendes umfasst:
Anmelden durch die CPE an dem spezifizierten Server gemäß der Adresse, dem Anmelde-Anwendernamen und dem Anmelde-Passwort des spezifizierten Servers, die in dem Befehl geführt sind.

4. Verfahren zum Erfassen von Funktionskonfigurationsinformationen über Anlagen am Kundenstandort, CPE-Funktionskonfigurationsinformationen, wobei das Verfahren Folgendes umfasst:
Aufbauen (301) einer CPE-WAN-Managementprotokoll-Sitzung, CWMP-Sitzung, zwischen einem Server zur automatischen Konfiguration, ACS, und einer CPE;
Senden durch den ACS eines Befehls zu der CPE, um anzufordern, dass die CPE CPE-Funktionskonfigurationsinformationen zu dem ACS hochlädt, wobei die CPE-Funktionskonfigurationsinformationen einen durch die CPE unterstützten Parametertyp und einen Parameterwertebereich umfassen;
Hochladen durch die CPE der CPE-Funktionskonfigurationsinformationen zu dem ACS;
Empfangen der durch die CPE hochgeladenen CPE-Funktionskonfigurationsinformationen durch den ACS; und
Konfigurieren der CPE gemäß den CPE-Funktionskonfigurationsinformationen durch den ACS.

5. Server zur automatischen Konfiguration, ACS, wobei der ACS Folgendes umfasst:
eine Sitzungsanforderungseinheit (901), die konfiguriert ist: eine Anforderung zu senden zum Aufbauen einer CPE-WAN-Managementprotokollsitzung, CWMP-Sitzung, zu einer Anlage am Kundenstandort, CPE, eine Anforderungsantwortnachricht von der CPE zu empfangen, eine CWMP-Sitzung mit der CPE aufzubauen und einer Signalisierungssendeeinheit zu melden, dass die CWMP-Sitzung aufgebaut worden ist, nachdem die CWMP-Sitzung aufgebaut ist; und
die Signalisierungssendeeinheit (902), die konfiguriert ist, einen Befehl zu der CPE zu senden, um anzufordern, dass die CPE CPE-Funktionskonfigurationsinformationen zu einem spezifizierten Server hochlädt, nach dem Empfangen einer von der Sitzungsanforderungseinheit gesendeten Meldung , wobei die CPE-Funktionskonfigurationsinformationen einen durch die CPE unterstützten Parametertyp und einen Parameterwertebereich umfassen;
eine Funktionskonfigurationsinformationserfassungseinheit, die konfiguriert ist: die CPE-Funktionskonfigurationsinformationen, die zu dem spezifizierten Server hochgeladen werden, zu erfassen und die erfassten CPE-Funktionskonfigurationsinformationen in eine Funktionskonfigurationsinformationsspeichereinheit zu speichern;
die Funktionskonfigurationsinformationsspeichereinheit, die konfiguriert ist, die CPE-Funktionskonfigurationsinformationen zu speichern; und
eine Funktionskonfigurationseinheit, die konfiguriert ist, die CPE gemäß den in der Funktionskonfigurationsinformationsspeichereinheit gespeicherten CPE-Funktionskonfigurationsinformationen zu konfigurieren.

6. Endgerätekonfigurationssystem, wobei das System Folgendes umfasst:
einen Server zur automatischen Konfiguration, ACS, der konfiguriert ist: eine Anforderung zum Aufbauen einer CPE-WAN-Managementprotokollsitzung, CWMP-Sitzung, zu einer Anlage am Kundenstandort, CPE, zu senden, eine Anforderungsantwortnachricht von der CPE zu empfangen, eine CWMP-Sitzung mit der CPE aufzubauen und einen Befehl zu der CPE zu senden, um anzufordern, dass die CPE CPE-Funktionskonfigurationsinformationen zu einem spezifizierten Server hochlädt, wobei die CPE-Funktionskonfigurationsinformationen einen durch die CPE unterstützten Parametertyp und einen Parameterwertebereich umfassen;
die CPE, die konfiguriert ist: die Anforderung zum Aufbauen einer CWMP-Sitzung von dem ACS zu empfangen, die Anforderungsantwortnachricht zu dem ACS zu senden, die CWMP-Sitzung mit dem ACS aufzubauen, den Befehl von dem ACS, der anfordert, dass die CPE CPE-Funktionskonfigurationsinformationen zu dem spezifizierten Server hochlädt, zu empfangen und die gespeicherten CPE-Funktionskonfigurationsinformationen zu dem spezifizierten Server hochzuladen; und
den spezifizierten Server, der konfiguriert ist, die durch die CPE hochgeladenen CPE-Funktionskonfigurationsinformationen zu empfangen und zu speichern;
wobei der ACS ferner konfiguriert ist, die CPE-Funktionskonfigurationsinformationen von dem spezifizierten Server zu erfassen und die CPE gemäß den CPE-Funktionskonfigurationsinformationen zu konfigurieren.

7. Endgerätekonfigurationssystem, wobei das System Folgendes umfasst:
einen Server zur automatischen Konfiguration, ACS, der konfiguriert ist: eine Anforderung zum Aufbauen einer CPE-WAN-Managementprotokollsitzung, CWMP-Sitzung, zu einer Anlage am Kundenstandort, CPE, zu senden, eine Anforderungsantwortnachricht von der CPE zu empfangen, eine CWMP-Sitzung mit der CPE aufzubauen, und einen Befehl zu der CPE zu senden, um anzufordern, dass die CPE CPE-Funktionskonfigurationsinformationen zu einem spezifizierten Server hochlädt, wobei die CPE-Funktionskonfigurationsinformationen einen durch die CPE unterstützten Parametertyp und einen Parameterwertebereich umfassen;
die CPE, die konfiguriert ist: die Anforderung zum Aufbauen einer CWMP-Sitzung von dem ACS zu empfangen, die Anforderungsantwortnachricht zu dem ACS zu senden, die CWMP-Sitzung mit dem ACS aufzubauen, den Befehl von dem ACS, der anfordert, dass die CPE CPE-Funktionskonfigurationsinformationen zu dem spezifizierten Server hochlädt, zu empfangen und die gespeicherten CPE-Funktionskonfigurationsinformationen zu dem spezifizierten Server hochzuladen; und
den spezifizierten Server, der konfiguriert ist, die durch die CPE hochgeladenen CPE-Funktionskonfigurationsinformationen zu empfangen und zu speichern;
wobei der spezifizierte Server ferner konfiguriert ist, entsprechende Verarbeitung gemäß einer Anweisung von dem ACS und den empfangenen CPE-Funktionskonfigurationsinformationen auszuführen; und
der ACS ferner konfiguriert ist, die CPE gemäß einem Verarbeitungsergebnis von dem spezifizierten Server zu konfigurieren.

8. Endgerätekonfigurationssystem, wobei das System Folgendes umfasst:
einen Server zur automatischen Konfiguration, ACS, der konfiguriert ist: eine Anforderung zum Aufbauen einer CPE-WAN-Managementprotokollsitzung, CWMP-Sitzung, zu einer Anlage am Kundenstandort, CPE, zu senden, eine Anforderungsantwortnachricht von der CPE zu empfangen, eine CWMP-Sitzung mit der CPE aufzubauen und einen Befehl zu der CPE zu senden, um anzufordern, dass die CPE CPE-Funktionskonfigurationsinformationen zu dem ACS hochlädt, wobei die CPE-Funktionskonfigurationsinformationen einen durch die CPE unterstützten Parametertyp und einen Parameterwertebereich umfassen; und
die CPE, die konfiguriert ist: die Anforderung zum Aufbauen einer CWMP-Sitzung von dem ACS zu empfangen, die Anforderungsantwortnachricht zu dem ACS zu senden, die CWMP-Sitzung mit dem ACS aufzubauen, den Befehl von dem ACS, der anfordert, dass die CPE CPE-Funktionskonfigurationsinformationen zu dem ACS hochlädt, zu empfangen und die gespeicherten CPE-Funktionskonfigurationsinformationen zu dem ACS hochzuladen;
wobei der ACS ferner konfiguriert ist, die CPE gemäß den CPE-Funktionskonfigurationsinformationen zu konfigurieren.

## Revendications

1. Procédé pour acquérir des informations de configuration de fonction d'équipement local d'abonné, dit CPE, le procédé comprenant les étapes consistant à :
établir (301) une session de protocole de gestion de WAN de CPE, dit CWMP, entre un serveur de configuration automatique, ACS, et un CPE ;
envoyer (302), par l'ACS, une commande au CPE pour demander au CPE de télécharger en amont vers un serveur spécifié des informations de configuration de fonction de CPE, lesquelles informations de configuration de fonction de CPE comprennent un type de paramètre pris en charge par le CPE et un intervalle de valeurs de paramètre ;
télécharger en amont (303) vers le serveur spécifié les informations de configuration de fonction de CPE ;
recevoir (404), par le serveur spécifié, les informations de configuration de fonction de CPE téléchargées en amont par le CPE ;
acquérir (407), par l'ACS, les informations de configuration de fonction de CPE auprès du serveur spécifié ; et
configurer, par l'ACS, le CPE conformément aux informations de configuration de fonction de CPE.

2. Procédé pour acquérir des informations de configuration de fonction d'équipement local d'abonné, dit CPE, le procédé comprenant les étapes consistant à :
établir (301) une session de protocole de gestion de WAN de CPE, dit CWMP, entre un serveur de configuration automatique, ACS, et un CPE ;
envoyer (302), par l'ACS, une commande au CPE pour demander au CPE de télécharger en amont vers un serveur spécifié des informations de configuration de fonction de CPE, lesquelles informations de configuration de fonction de CPE comprennent un type de paramètre pris en charge par le CPE et un intervalle de valeurs de paramètre ;
télécharger en amont (303) vers le serveur spécifié les informations de configuration de fonction de CPE ;
recevoir (404), par le serveur spécifié, les informations de configuration de fonction de CPE téléchargées en amont par le CPE ;
donner, par l'ACS, pour instruction au serveur spécifié de réaliser un traitement correspondant conformément aux informations de configuration de fonction de CPE reçues ; et
configurer, par l'ACS, le CPE conformément à un résultat du traitement du serveur spécifié.

3. Procédé selon la revendication 1 ou 2, dans lequel la commande contient en outre une adresse, un nom d'utilisateur de connexion et un mot de passe de connexion du serveur spécifié, et comprenant en outre l'étape consistant à :
se connecter, par le CPE, au serveur spécifié conformément à l'adresse, au nom d'utilisateur de connexion et au mot de passe de connexion contenus dans la commande.

4. Procédé pour acquérir des informations de configuration de fonction d'équipement local d'abonné, dit CPE, le procédé comprenant les étapes consistant à :
établir (301) une session de protocole de gestion de WAN de CPE, dit CWMP, entre un serveur de configuration automatique, ACS, et un CPE ;
envoyer, par l'ACS, une commande au CPE pour demander au CPE de télécharger en amont vers l'ACS des informations de configuration de fonction de CPE, lesquelles informations de configuration de fonction de CPE comprennent un type de paramètre pris en charge par le CPE et un intervalle de valeurs de paramètre ;
télécharger en amont, par le CPE, vers l'ACS les informations de configuration de fonction de CPE ;
recevoir, par l'ACS, les informations de configuration de fonction de CPE téléchargées en amont par le CPE ; et
configurer, par l'ACS, le CPE conformément aux informations de configuration de fonction de CPE.

5. Serveur de configuration automatique, dit ACS, l'ACS comprenant :
une unité de demande de session (901), configurée pour : envoyer à un équipement local d'abonné, dit CPE, une demande visant à établir une session de protocole de gestion de WAN de CPE, dit CWMP, recevoir un message de réponse à la demande en provenance du CPE, établir une session de CWMP avec le CPE, et notifier à une unité d'envoi de signalisation que la session de CWMP a été établie une fois la session de CWMP établie ; et
l'unité d'envoi de signalisation (902), configurée pour envoyer une commande au CPE pour demander au CPE de télécharger en amont vers un serveur spécifié des informations de configuration de fonction de CPE après avoir reçu une notification envoyée par l'unité de demande de session, lesquelles informations de configuration de fonction de CPE comprennent un type de paramètre pris en charge par le CPE et un intervalle de valeurs de paramètre ;
une unité d'acquisition d'informations de configuration de fonction, configurée pour : acquérir les informations de configuration de fonction de CPE téléchargées en amont vers le serveur spécifié et stocker les informations de configuration de fonction de CPE acquises dans une unité de stockage d'informations de configuration de fonction ;
l'unité de stockage d'informations de configuration de fonction, configurée pour stocker les informations de configuration de fonction de CPE ; et
une unité de configuration de fonction, configurée pour configurer le CPE conformément aux informations de configuration de fonction de CPE stockées dans l'unité de stockage d'informations de configuration de fonction.

6. Système de configuration de terminal, le système comprenant :
un serveur de configuration automatique, dit ACS, configuré pour : envoyer à un équipement local d'abonné, dit CPE, une demande visant à établir une session de protocole de gestion de WAN de CPE, dit CWMP, recevoir un message de réponse à la demande en provenance du CPE, établir une session de CWMP avec le CPE, et
envoyer une commande au CPE pour demander au CPE de télécharger en amont vers un serveur spécifié des informations de configuration de fonction de CPE, lesquelles informations de configuration de fonction de CPE comprennent un type de paramètre pris en charge par le CPE et un intervalle de valeurs de paramètre ;
le CPE, configuré pour : recevoir la demande visant à établir une session de CWMP en provenance de l'ACS, envoyer le message de réponse à la demande à l'ACS,
établir la session de CWMP avec l'ACS, recevoir la commande en provenance de l'ACS demandant au CPE de télécharger en amont vers le serveur spécifié des informations de configuration de fonction de CPE, et télécharger en amont vers le serveur spécifié les informations de configuration de fonction de CPE stockées ;
le serveur spécifié, configuré pour recevoir et stocker les informations de configuration de fonction de CPE téléchargées en amont par le CPE ;
lequel ACS est en outre configuré pour acquérir les informations de configuration de fonction de CPE auprès du serveur spécifié et configurer le CPE conformément aux informations de configuration de fonction de CPE.

7. Système de configuration de terminal, le système comprenant :
un serveur de configuration automatique, dit ACS, configuré pour : envoyer à un équipement local d'abonné, dit CPE, une demande visant à établir une session de protocole de gestion de WAN de CPE, dit CWMP, recevoir un message de réponse à la demande en provenance du CPE, établir une session de CWMP avec le CPE, et envoyer une commande au CPE pour demander au CPE de télécharger en amont vers un serveur spécifié des informations de configuration de fonction de CPE, lesquelles informations de configuration de fonction de CPE comprennent un type de paramètre pris en charge par le CPE et un intervalle de valeurs de paramètre ;
le CPE, configuré pour : recevoir la demande visant à établir une session de CWMP en provenance de l'ACS, envoyer le message de réponse à la demande à l'ACS,
établir la session de CWMP avec l'ACS, recevoir la commande en provenance de l'ACS demandant au CPE de télécharger en amont vers le serveur spécifié des informations de configuration de fonction de CPE, et télécharger en amont vers le serveur spécifié les informations de configuration de fonction de CPE stockées ; et
le serveur spécifié, configuré pour recevoir et stocker les informations de configuration de fonction de CPE téléchargées en amont par le CPE ;
lequel serveur spécifié est en outre configuré pour réaliser un traitement correspondant conformément à une instruction en provenance de l'ACS et aux informations de configuration de fonction de CPE reçues ; et
lequel ACS est en outre configuré pour configurer le CPE conformément à un résultat du traitement en provenance du serveur spécifié.

8. Système de configuration de terminal, le système comprenant :
un serveur de configuration automatique, dit ACS, configuré pour : envoyer à un équipement local d'abonné, dit CPE, une demande visant à établir une session de protocole de gestion de WAN de CPE, dit CWMP, recevoir un message de réponse à la demande en provenance du CPE, établir une session de CWMP avec le CPE, et
envoyer une commande au CPE pour demander au CPE de télécharger en amont vers l'ACS des informations de configuration de fonction de CPE, lesquelles informations de configuration de fonction de CPE comprennent un type de paramètre pris en charge par le CPE et un intervalle de valeurs de paramètre ; et
le CPE, configuré pour : recevoir la demande visant à établir une session de CWMP en provenance de l'ACS, envoyer le message de réponse à la demande à l'ACS,
établir la session de CWMP avec l'ACS, recevoir la commande en provenance de l'ACS demandant au CPE de télécharger en amont vers l'ACS des informations de configuration de fonction de CPE, et télécharger en amont vers l'ACS les informations de configuration de fonction de CPE stockées ;
lequel ACS est en outre configuré pour configurer le CPE conformément aux informations de configuration de fonction de CPE.
